(19) Europäisches Patentamt
European Patent Office
Office européen des brevets

(11) **EP 3 605 294 A1**

(12) **EUROPEAN PATENT APPLICATION**
published in accordance with Art. 153(4) EPC

(43) Date of publication:
**05.02.2020 Bulletin 2020/06**

(51) Int Cl.:
*G06F 3/042* (2006.01)     *G02B 27/48* (2006.01)
*G03B 21/00* (2006.01)     *G03B 21/14* (2006.01)
*H04N 5/74* (2006.01)

(21) Application number: **18770820.1**

(22) Date of filing: **19.02.2018**

(86) International application number:
**PCT/JP2018/005715**

(87) International publication number:
**WO 2018/173584 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **23.03.2017   JP 2017057218**

(71) Applicant: **Sony Corporation
Tokyo 108-0075 (JP)**

(72) Inventor: **KANEDA, Kazumasa
Tokyo 108-0075 (JP)**

(74) Representative: **D Young & Co LLP
120 Holborn
London EC1N 2DY (GB)**

(54) **BEAM IRRADIATION DEVICE AND PROJECTOR HAVING DETECTION FUNCTION**

(57)     A beam irradiation apparatus according to the present disclosure includes a light source, and an irradiation optical system that includes a plurality of optical elements disposed on an optical path of light obtained from the light source, and that outputs an irradiation beam in which the light obtained from the light source is expanded in a one-dimensional direction. At least one of the plurality of optical elements has a structure of reducing coherence in the one-dimensional direction of the irradiation beam.

[ FIG. 9 ]

**Description**

Technical Field

The present disclosure relates to a beam irradiation apparatus, and a projector with a detection function having a picture projection function and an object detection function.

Background Art

In recent years, in a smartphone, a tablet terminal, etc., the use of a touch panel has allowed for touch operation responding to human intuition. In turn, in a projector that projects a picture on a screen, a technology has been developed that enables the touch operation with the use of an LLP (Laser Light Plane) method. The LLP method uses a beam irradiation apparatus including a laser light source that irradiates a projection plane of the projector with a membrane-shaped irradiation beam as illumination light for detection, in a manner that the projection plane is covered with a narrow clearance left between the projection plane and the membrane-shaped irradiation beam. When a detection object, the detection object being configured to be detected, such as a finger moves across the membrane-shaped irradiation beam, scattered light is generated at a location that such an object moves across. The scattered light is detected as detection light by the use of a camera. This makes it possible to achieve the touch operation based on judgement of an object position. In the LLP method, an infrared light beam is typically used to make the illumination light for detection invisible.

Citation List

Patent Literature

PTL 1: Japanese Unexamined Patent Application Publication No. 2015-64550

PTL 2: International Publication No. WO2016/125384

Summary of the Invention

In a case where a touch operation function is achieved using the LLP method, it is quite important that an intensity distribution of the irradiation beam to be used as the illumination light for detection be stable in terms of the accuracy of touch detection and the stability of a detection signal.

It is desirable to provide a beam irradiation apparatus, and a projector with a detection function each of which allows for stabilizing the intensity distribution of the irradiation beam.

A beam irradiation apparatus according to an embodiment of the present disclosure includes: a light source; and an irradiation optical system that includes a plurality of optical elements disposed on an optical path of light obtained from the light source, and that outputs an irradiation beam in which the light obtained from the light source is expanded in a one-dimensional direction. At least one of the plurality of optical elements has a structure of reducing coherence in the one-dimensional direction of the irradiation beam.

A projector with a detection function according to an embodiment of the present disclosure includes: a projection optical system that projects picture light on a projection plane; an irradiation optical system that includes a plurality of optical elements disposed on an optical path of light obtained from a light source, that expands the light obtained from the light source in a one-dimensional direction, and that generates and outputs an irradiation beam to be used for detecting a detection object on the projection plane on the basis of the light obtained from the light source, the detection object being configured to be detected; and an imaging device that scattered light of the irradiation beam hitting against the detection object enters. At least one of the plurality of optical elements has a structure of reducing coherence in the one-dimensional direction of the irradiation beam.

In the beam irradiation apparatus, and the projector with a detection function according to an embodiment of the present disclosure, the use of the at least one of the plurality of optical elements in the irradiation optical system reduces the coherence in the one-dimensional direction of the irradiation beam.

According to the beam irradiation apparatus, and the projector with a detection function according to an embodiment of the present disclosure, the use of the at least one of the plurality of optical elements in the irradiation optical system reduces the coherence in the one-dimensional direction of the irradiation beam, which makes it possible to stabilize the intensity distribution of the irradiation beam.

It is to be noted that effects described above are not necessarily limitative, and any of effects described in the present disclosure may be provided.

Brief Description of Drawings

[FIG. 1] FIG. 1 is a schematic configuration diagram of an example of a beam irradiation apparatus according to a first embodiment of the present disclosure.
[FIG. 2] FIG. 2 is a schematic configuration diagram of an example of a projector with a detection function according to the first embodiment.
[FIG. 3] FIG. 3 is a schematic block diagram of a functional configuration example of the projector with a detection function according to the first embodiment.

[FIG. 4] FIG. 4 describes an example of a position of observing an intensity distribution of an irradiation beam from the beam irradiation apparatus according to the first embodiment.

[FIG. 5] FIG. 5 describes an example of an intensity distribution of an irradiation beam to be observed within a range of an A-A' line illustrated in FIG. 4 in a beam irradiation apparatus according to a comparative example.

[FIG. 6] FIG. 6 describes an example of an intensity distribution of an irradiation beam to be observed within a range of a B-B' line illustrated in FIG. 4 in the beam irradiation apparatus according to the comparative example.

[FIG. 7] FIG. 7 describes an example of an intensity distribution of an irradiation beam to be observed within a range of the B-B' line illustrated in FIG. 4 in a beam irradiation apparatus according to a working example.

[FIG. 8] FIG. 8 is a schematic configuration diagram of an example of a cylindrical lens array in the beam irradiation apparatus according to the comparative example.

[FIG. 9] FIG. 9 is a schematic configuration diagram of a structure of a working example of a cylindrical lens array in the beam irradiation apparatus according to the first embodiment.

[FIG. 10] FIG. 10 describes a numerical working example (a working example 1) of the cylindrical lens array illustrated in FIG. 9.

[FIG. 11] FIG. 11 describes a numerical working example of a superposition pattern of the cylindrical lens array illustrated in FIG. 9.

[FIG. 12] FIG. 12 describes a numerical working example (a working example 2) of a grating in the beam irradiation apparatus according to the first embodiment.

[FIG. 13] FIG. 13 describes an example of a relationship between a depth of a groove and diffraction efficiency (intensity) of the grating.

[FIG. 14] FIG. 14 describes an example of values for each of diffraction orders (intensity) of the grating.

[FIG. 15] FIG. 15 describes quantitative data of interference states of irradiation beams that are caused by varying a configuration of the beam irradiation apparatus.

[FIG. 16] FIG. 16 is a schematic configuration diagram of an example of a beam irradiation apparatus according to a second embodiment.

[FIG. 17] FIG. 17 is a schematic configuration diagram of an example of a beam irradiation apparatus according to a third embodiment.

[FIG. 18] FIG. 18 is a schematic configuration diagram of an example of a beam irradiation apparatus according to a fourth embodiment.

[FIG. 19] FIG. 19 is a schematic configuration diagram of an example of a beam irradiation apparatus according to a fifth embodiment.

Modes for Carrying out the Invention

Hereinafter, some embodiments of the present disclosure will be described in detail with reference to the drawings. It is to be noted that descriptions are given in the following order.

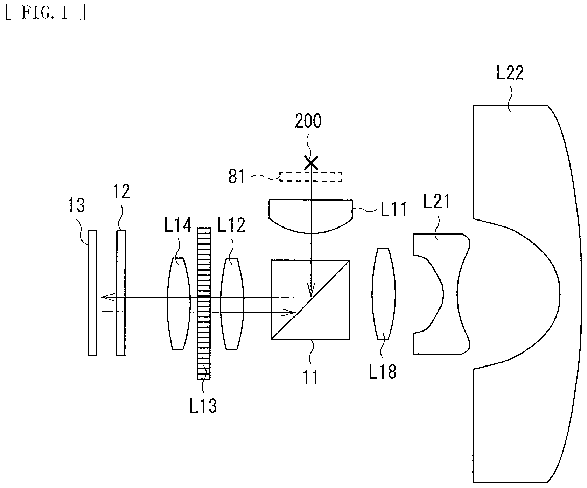

1. First Embodiment (FIGs. 1 to 15)

   1.1 Overview of Beam Irradiation Apparatus
   1.2 Overview of Projector with Detection Function
   1.3 Description of Technique of Reducing Coherence of Irradiation Beam
   1.4 Effects

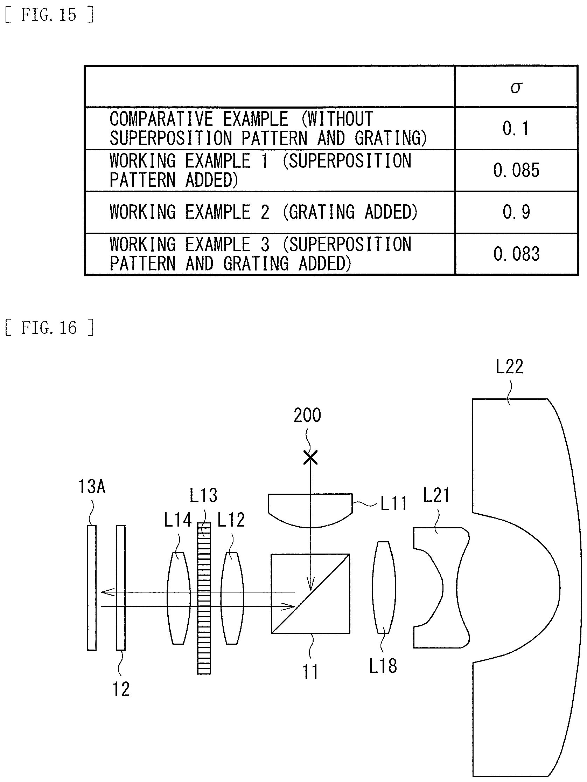

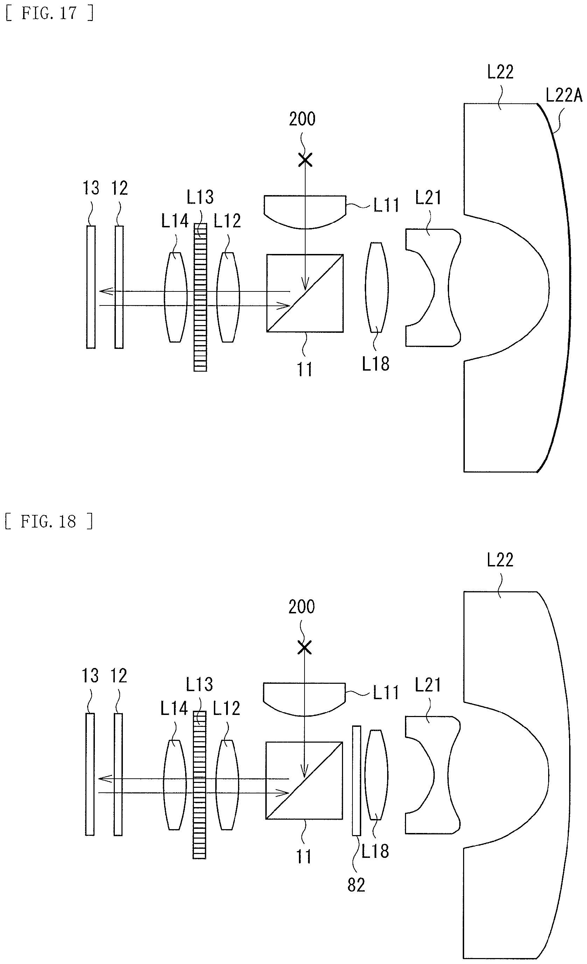

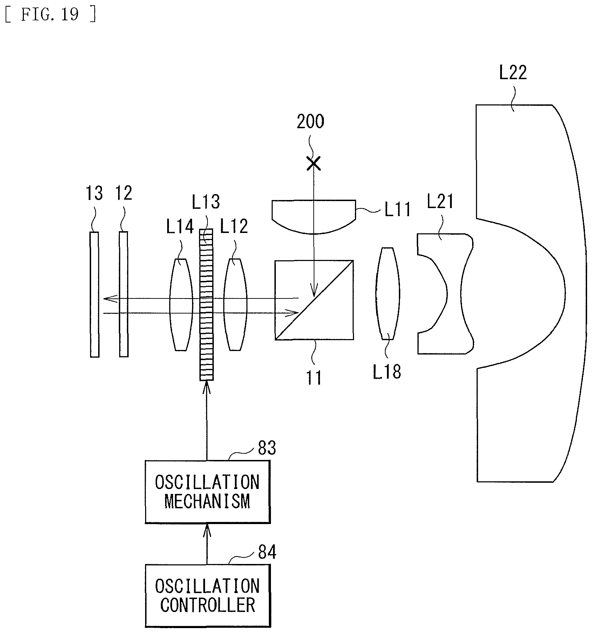

2. Second Embodiment (FIG. 16)
3. Third Embodiment (FIG. 17)
4. Fourth Embodiment (FIG. 18)
5. Fifth Embodiment (FIG. 19)
6. Other Embodiments

[1. First Embodiment]

[1.1. Overview of Beam Irradiation Apparatus]

FIG. 1 schematically illustrates an example of a beam irradiation apparatus according to a first embodiment of the present disclosure.

The beam irradiation apparatus includes an infrared light source 200, and an irradiation optical system that outputs an irradiation beam in which light obtained from the infrared light source 200 is expanded in a one-dimensional direction.

The infrared light source 200 is a laser light source that emits infrared light.

The irradiation optical system includes a plurality of optical elements disposed on an optical path of the light obtained from the infrared light source 200. In a configuration example in FIG. 1, as the plurality of optical elements, the irradiation optical system has a collimator lens L11, a polarization split element 11, a relay lens L12, a cylindrical lens array L13, a relay lens L14, a λ/4 plate 12, a mirror 13, a relay lens L18, a first irradiation lens L21, and a second irradiation lens L22. Further, as the optical element, the irradiation optical system may have a grating 81 disposed between the infrared light source 200 and the collimator lens L11. In addition, as the optical element, the irradiation optical system may have a glass member that seals the irradiation optical system. The grating 81 may be disposed on a surface of the glass member.

Of those plurality of optical elements, the lens elements excluding the collimator lens L11 are in cylindrical shapes, having no lens actions in a direction orthogonal to the one-dimensional direction in which a beam is expanded. The one-dimensional direction in which the beam is expanded is a direction in a plane of paper in FIG. 1, and the lens elements excluding the collimator lens L11 have lens actions in the plane of paper in FIG. 1. The collimator lens L11 has an action of rendering the light obtained from the infrared light source 200 into substantially collimated light.

In the irradiation optical system illustrated in FIG. 1, the infrared light source 200 and the collimator lens L11 are disposed in a first direction relative to the polarization split element 11. The relay lens L12, the cylindrical lens array L13, the relay lens L14, the λ/4 plate 12, and the mirror 13 are disposed in a second direction (on an optical path of the light obtained from the infrared light source 200 that is folded by the polarization split element 11). The relay lens L18, the first irradiation lens L21, and the second irradiation lens L22 are disposed in a third direction (on an opposite side of the second direction relative to the polarization split element 11).

The polarization split element 11 reflects a first polarized component (for example, an S-polarized component) of the light obtained from the infrared light source 200 toward a direction in which the cylindrical lens array L13, the mirror 13, etc. are disposed. The polarization split element 11 also outputs a second polarized component (for example, a P-polarized component) of the light that is reflected by the mirror 13 and re-enters the cylindrical lens array L13, etc. toward the first irradiation lens L21 and the second irradiation lens L22, through the relay lens L18. The λ/4 plate 12 is provided for conversion between the first polarized component and the second polarized component.

The first irradiation lens L21 and the second irradiation lens L22 are each a wide-angle lens having a negative refractive power in the one-dimensional direction, and a light-expanding action only in the one-dimensional direction. The first irradiation lens L21 and the second irradiation lens L22 expand the light output from the polarization split element 11 in the one-dimensional direction through the relay lens L18 and output the resulting light as an irradiation beam.

It is to be noted that at least one of the plurality of optical elements in the above-described irradiation optical system has a structure of reducing the coherence in the one-dimensional direction of the irradiation beam, as described later. As described later, the optical elements each having the structure of reducing the coherence may be, for example, the cylindrical lens array L13 and the grating 81.

[1.2 Overview of Projector with Detection Function]

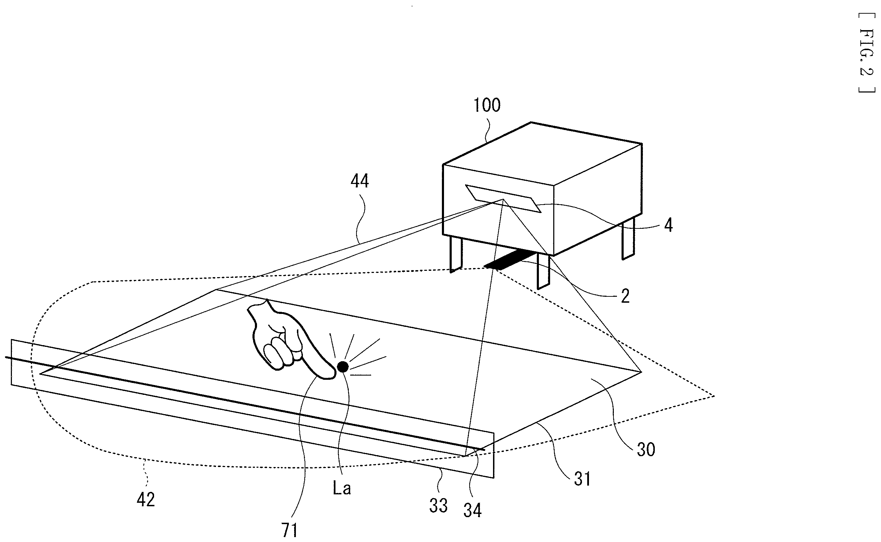

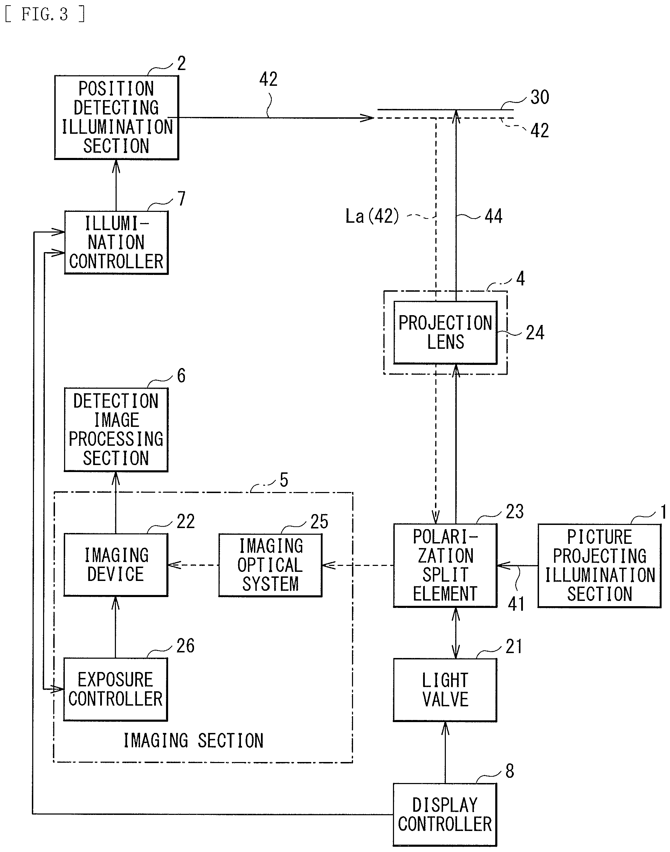

Each of FIG. 2 and FIG. 3 illustrates an example of a projector with a detection function that uses the irradiation beam from the beam irradiation apparatus illustrated in FIG. 1 as illumination light for detecting an object.

The projector with a detection function according to the present embodiment has a function working as a projector that projects a picture on a projection plane 30, and a touch detection (position detection) function that detects a position and movement of a position detection object 71, the position detection object 71 being configured to be detected, such as a human finger, for example, on the projection plane 30.

It is to be noted that the projection plane 30 may be a screen for projection use. Alternatively, the projection plane 30 may be any of a desktop surface, a floor surface, etc. Further, the projection plane 30 may be any of a wall surface, etc.

As illustrated in FIG. 2 and FIG. 3, the projector with a detection function according to the present embodiment includes an picture projecting illumination section 1, a position detecting illumination section 2, a projection optical system 4, an imaging section 5, a detection image processing section 6, an illumination controller 7, and a display controller 8. The projector with a detection function according to the present embodiment further includes a light valve 21 and a polarization split element 23.

The picture projecting illumination section 1 serves as a first illumination section that outputs picture projecting illumination light 41 as first illumination light. The light valve 21 is illuminated with the picture projecting illumination light 41 that is outputted from the picture projecting illumination section 1 through the polarization split element 23.

The picture projecting illumination section 1 has an illumination optical system and a light source section, both of which are not illustrated. The light source section has a laser light source that emits light having a spectrum of R (red), G (green), and B (blue), for example. The light source section has, for example, a blue laser to emit B light, a green laser to emit G light, and a red laser to emit R light. Each of the red laser, the green laser, and the blue laser may be emission-controlled in a field sequential method by an unillustrated emission controller, for example.

The illumination optical system of the picture projecting illumination section 1 generates the picture projecting illumination light 41 having a spectrum of RGB on the basis of light obtained from the light source section.

The light valve 21 modulates the picture projecting illumination light 41 on the basis of picture data provided from the display controller 8 and generates picture light 44. The light valve 21 is a reflective liquid crystal device such as an LCOS (Liquid Crystal On Silicon), for example. The picture light 44 that is generated by the light valve 21 is projected on the projection plane 30 through the polarization split element 23 and the projection optical system 4.

The position detecting illumination section 2 serves as a second illumination section that outputs position detecting illumination light 42 as second illumination light to be used for position detection of the position detection object 71 on the projection plane 30. The position detecting illumination section 2 is provided, for example, at the bottom of a main unit 100. The position detecting illumination section 2 outputs the position detecting illumination light 42 that is substantially collimated relative to the projection plane 30, to cause a projection area 31 of the picture light 44 on the projection plane 30 to be at least covered with the position detecting illumination light 42 from a predetermined height. The position detecting illumination section 2 may include the infrared light source 200 and the irradiation optical system in the beam irradiation apparatus illustrated in FIG. 1.

The position detecting illumination light 42 is different from the picture projecting illumination light 41 in a wavelength band. The wavelength band of the picture projecting illumination light 41 is a visible range, and the wavelength band of the position detecting illumination light 42 is a near-infrared range.

The detection image processing section 6 is an image processing section that performs position detection of the position detection object 71 on the basis of an imaging result of the imaging section 5. For example, the detection image processing section 6 analyzes a detection signal from the imaging section 5 and acquires positional data (coordinate data) of a detected object. The detection image processing section 6 may have a function to analyze not only a position of the position detection object 71 but also movement such as gesture motion performed by the position detection object 71.

The illumination controller 7 performs control of switching between On (emission) and Off (non-emission) of the position detecting illumination light 42 performed by the position detecting illumination section 2. Further, the illumination controller 7 controls temporal light-quantity modulation of light obtained from a light source (the infrared light source 200 in FIG. 1) of the position detecting illumination section 2.

The projection optical system 4 has a projection lens 24. The projection lens 24 may be an ultrashort focus lens. In addition to a function for projecting a picture, the projection optical system 4 has a function acting as an imaging optical system for position detection. The picture light 44 generated by the light valve 21 enters the projection optical system 4, and scattered light La of the position detecting illumination light 42 obtained by the position detecting illumination light 42 hitting against the position detection object 71 is simultaneously captured into the projection optical system 4 from the projection plane 30 side.

The imaging section 5 has an imaging device 22, an imaging optical system 25, and an exposure controller 26.

The imaging device 22 includes a solid-state imaging device such as a CMOS (Complementary Metal-Oxide Semiconductor) and a CCD (Charge-Coupled Device). The imaging device 22 is disposed at a position that is optically conjugated to the projection plane 30. Further, the imaging device 22 is also disposed at a position that is optically conjugated to the light valve 21. More specifically, in a case where the light valve 21 is a reflective liquid crystal device, a display surface (a liquid crystal surface) for creating a picture thereon and an imaging surface of the imaging device 22 are disposed at positions that are optically conjugated to each other. The scattered light La of the position detecting illumination light 42 enters the imaging device 22 through the projection optical system 4 and the polarization split element 23. The imaging device 22 allows for imaging by using at least almost the same area as a projection area 31 on the projection plane 30 as an imaging area.

The imaging optical system 25 is disposed between an optical-conjugated plane of the light valve 21 and the imaging device 22. The imaging optical system 25 has, for example, a reducing optical system including a plurality of relay lenses, and a bandpass filter. Disposing the reducing optical system including the relay lenses as the imaging optical system 25 makes it possible to provide a position that is optically conjugated to the light valve 21 at a distance farther away from a conjugated plane. Further, disposing the reducing optical system allows for making a size of the imaging device 22 smaller than the light valve 21, while disposing the imaging device 22 at a position that is optically conjugated to the light valve 21.

The exposure controller 26 controls an exposure period and exposure timing (shutter timing) of the imaging device 22. For example, in a case where the imaging device 22 is a CCD, etc., the exposure controller 26 controls exposure of the imaging device 22 in a global shutter method. Alternatively, for example, in a case where the imaging device 22 is a CMOS, etc., the exposure controller 26 controls exposure of the imaging device 22 in a rolling shutter method.

The polarization split element 23 is a polarizing beam splitter having four optical surfaces, for example. The picture projecting illumination light 41 from the picture projecting illumination section 1 enters a first optical surface of the polarization split element 23. The light valve 21 is disposed on a second optical surface side of the polarization split element 23. The imaging section 5 is disposed on a third optical surface side of the polarization split element 23. The projection optical system 4 is disposed on a fourth optical surface side of the polarization split element 23.

The polarization split element 23 splits entering light into a first polarized component (for example, an S-polarized component) and a second polarized component (for example, a P-polarized component), and outputs such split light in different directions from each other. The polarization split element 23 causes the specific first polarized component to be selectively reflected, and the specific second polarized component to be selectively transmitted. The polarization split element 23 reflects the first polarized component included in the picture projecting illumination light 41 that enters the first optical surface toward the light valve 21. The light that is modulated as the second polarized component by the light valve 21 is outputted from the fourth optical surface side of the polarization split element 23, and enters the projection optical system 4 as the picture light 44.

Further, the scattered light La of the position detecting illumination light 42 enters the fourth optical surface side of the polarization split element 23 through the projection optical system 4. The polarization split element 23 reflects the first polarized component included in the scattered light La of the position detecting illumination light 42 toward the imaging section 5 through the third optical surface.

[Operation of Position Detection]

As illustrated in FIG. 2, the position detecting illumination section 2 outputs, from the bottom of the main unit 100, the position detecting illumination light 42 that is expanded at a wide angle to cover at least the projection area 31 of the picture light 44 on the projection plane 30 from a predetermined height. This ensures that at least the projection area 31 on the projection plane 30 is covered with a near-infrared light barrier by means of the position detecting illumination light 42 from the predetermined height. By covering the projection area 31 with such a near-infrared light barrier, the position detecting illumination light 42 is not diffused in the absence of pointing by means of the position detection object 71 such as a finger. In contrast, in a case where a finger or any other material points at the projection area 31, this blocks the near-infrared light barrier, resulting in generation of the scattered light La of the position detecting illumination light 42 obtained by the position detecting illumination light 42 hitting against the finger or any other material. The scattered light La of the position detecting illumination light 42 enters the imaging device 22 through the projection optical system 4 and the polarization split element 23. Here, since the imaging device 22 and the projection plane 30 are disposed at positions having a relationship of optical conjugation, there is a one-to-one relationship between a picture projecting position and a position at which the finger or any other material points. Therefore, by analyzing a detection signal based on an imaging result of the imaging device 22 with the use of the detection image processing section 6, it is possible to identify a position (coordinates) at which the finger or any other material points on the projection plane 30. The detection image processing section 6 gives a feedback of identified positional information to the display controller 8 to reflect such positional information in picture data to be projected. This allows a user to manipulate a picture using the finger or any other material as a role like a mouse pointer.

[1.3 Description of Technique of Reducing Coherence of Irradiation Beam]

The projector with a detection function using the LLP method as described above adopts a method that irradiates the projection plane 30 with an irradiation beam serving as the position detecting illumination light 42 with a narrow clearance left between the projection plane 30 and the irradiation beam, and that detects only the position detection object 71 blocking the irradiation beam, and uses a laser light source as the infrared light source 200. Further, the cylindrical lens array L13 is disposed in the irradiation optical system of the beam irradiation apparatus and overlaps light fluxes of light obtained from the infrared light source 200, thereby uniformizing light. In such a case, the infrared light source 200 is the laser light source, and thus fine strong/weak patterns are generated due to interference among the light fluxes in the course of overlapping the light fluxes. In a state of such a non-uniform intensity distribution, a whole detection area of the position detection object 71 is irradiated with expanded light as the irradiation beam. Therefore, at a detection position of the position detection object 71, it is likely that positional dependence of object detection may occur to the non-negligible degree.

Accordingly, it is desirable that the non-uniformity in the intensity distribution of the irradiation beam be reduced to suppress the positional dependence of object detection.

As illustrated in FIG. 2, the position detecting illumination section 2 is disposed at the bottom of the main unit 100, for example. The irradiation beam of the position detecting illumination light 42 is distributed within a range covering the projection area 31 of the picture light 44. Considering an ordinary size available for sharing, for example, documents or drawings on desktop, the projection area 31 is, for example, within a range of about 20 to 30 inches. To detect the position detection object 71 such as a finger on the whole projection area 31, it is necessary to properly detect the position detection object 71 not only in an area in the vicinity of the main unit 100, but also in an area faraway from the main unit 100. It is a state of the irradiation beam that exerts an influence on this quality.

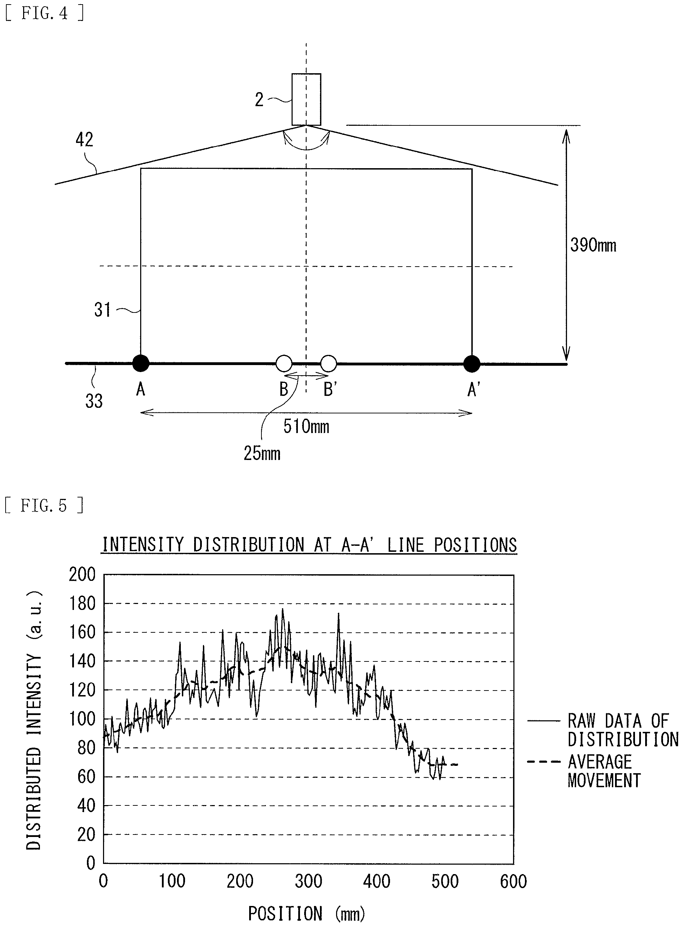

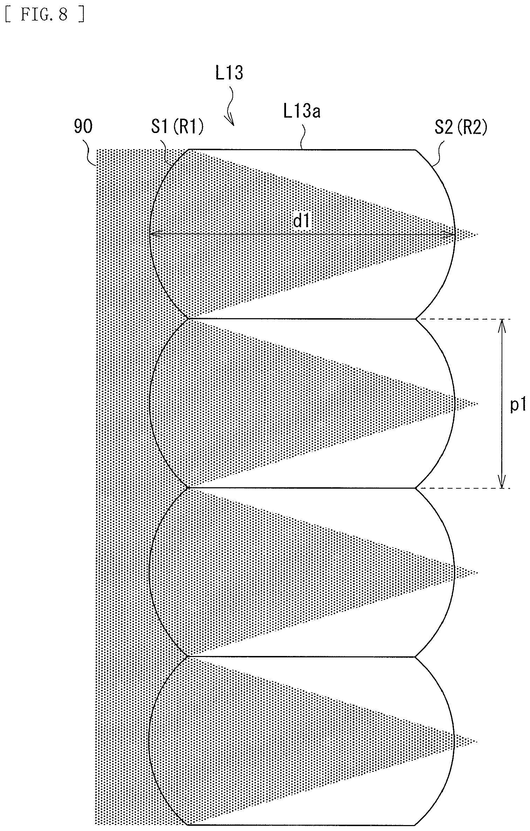

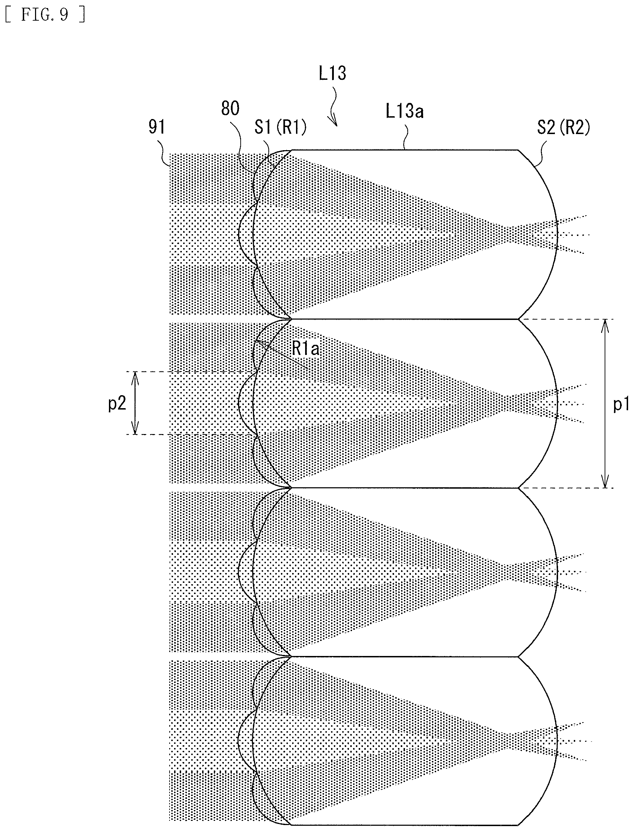

FIG. 4 illustrates an example of a position of observing an intensity distribution of the irradiation beam. FIG. 5 illustrates an example of an intensity distribution of an irradiation beam to be observed within a range of an A-A' line illustrated in FIG. 4 in a beam irradiation apparatus according to a comparative example. Here, the beam irradiation apparatus according to the comparative example represents a case where such a beam irradiation apparatus includes no optical element having a structure of reducing the coherence of the irradiation beam. The structure of reducing the coherence is, for example, a structure found in a superposition pattern 80 (FIG. 9) to be described later in the cylindrical lens array L13. A structure of the cylindrical lens array L13 in the beam irradiation apparatus according to the comparative example is a structure as illustrated in FIG. 8, in which a plurality of double-convex cylindrical lenses 13a is arranged.

Here, consideration is given to a state of the irradiation beam reaching a faraway position of the projection area 31. As illustrated in FIG. 2, consideration is given to a state of a beam cross-sectional surface 34 on a wall 33 located at a faraway position of the projection area 31. Here, as illustrated in FIG. 4, data is represented in a case where a size of the projection area 31 is 23 inches, the wall 33 is located at a position about 390 mm away from the main unit 100, and a breadth of the projection area 31 is 510 mm.

FIG. 5 illustrates a state where intensity of the irradiation beam depends on positions to show a mountain-like shape, which indicates a distribution having a tendency in terms of design. Apart from such a distribution, there exist intensity fluctuations with short jagged cycles. The touch detection performed by the projector with a detection function adopts a method in which the position detecting illumination light 42 hits against the position detection object 71 such as a finger, and a portion of the scattered light La of the position detecting illumination light 42 is captured by the projection lens 24 to be received by the imaging device 22, and thus the intensity distribution of the irradiation beam is directly linked, as it is, to a signal intensity of the touch position detection. Therefore, presence of such variations in distribution indicates that only a slight positional difference causes the intensity of a detection signal to be significantly varied.

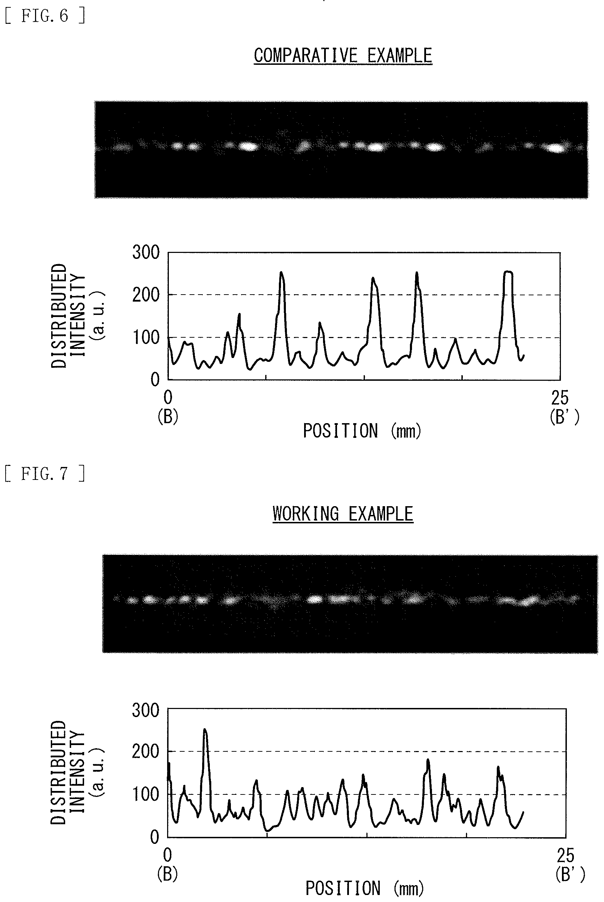

FIG. 6 illustrates an example of an intensity distribution of an irradiation beam to be observed within a range of a B-B' line illustrated in FIG. 4 in the beam irradiation apparatus according to the comparative example. FIG. 7 illustrates an example of an intensity distribution of an irradiation beam to be observed within a range of the B-B' line illustrated in FIG. 4 in a beam irradiation apparatus according to a working example. Here, the characteristics in FIG. 7 are those seen in a case where the superposition pattern 80 is formed on a first surface S1 of the cylindrical lens array L13, as illustrated in FIG. 9 to be described later. The characteristics in FIG. 6 are those seen in a case where the cylindrical lens array L13 is structured as illustrated in FIG. 8.

FIGs. 6 and 7 illustrate cross-sectional intensities at positions of the B-B' line that is formed by cutting out a width of 25 mm within a range of the A-A' line illustrated in FIG. 4.

In the comparative example illustrated in FIG. 6, strong and weak intensities are clearly observed in such a manner that strong peaks are exhibited at intervals of about 5 to 10 mm, and the intensities remain in low levels at peak-to-peak intervals. This is because the infrared light source 200 of the beam irradiation apparatus is the laser light source, which causes inter-beam interference while the irradiation beams travel through the irradiation optical system to be partially intensified with respect to one another, resulting in appearance of the peaks. Since a total sum of the light quantity is unchanged, the light intensity is extremely weak at the peak-to-peak intervals. The intensity of a detection signal varies depending on the light intensity, and therefore variations in the signal intensity depending on positions lead to deterioration in the stability of touch sensing and the position pointing accuracy. Further, more importantly, there is a more fatal issue. In a case where the peak-to-peak interval is as long as 10 mm, although an adult's finger is about 10 mm in width, if object detection is attempted using a child's finger or any object smaller in width than a finger as a pointing material, it is likely that the position detection object 71 will be disposed at the peak-to-peak intervals. In such a case, since intensity of the irradiation beam is too low, the scattered light La of the irradiation beam is weakened, resulting in a significant issue that the detection signal is too weak to be detected.

The comparative example illustrated in FIG. 6 represents a condition in which equiphase wavefronts are likely to collect light to cause interference for a light flux 90 that enters each of the cylindrical lenses L13a (FIG. 8) in the cylindrical lens array L13. In the working example illustrated in FIG. 7, on the first surface S1 of each of the cylindrical lenses L13a, the superposition pattern 80 having a curvature that is different from that of the first surface S1 is superimposed, which results in superposition of non-equiphase wavefronts for an entering light flux 91, leading to more mitigative interference condition as compared with the comparative example illustrated in FIG. 6. It is seen that peaks themselves still remain; however, peak values are lowered, and conversely the intensity is raised at the peak-to-peak intervals to the degree of reduction in the peak values, thereby achieving mitigation to stabilize the intensity independently of any position. Presence of such a detection beam makes it possible to achieve stable touch-detection operation that is independent of any position and size of a detection object.

[Specific Example of Structure of Reducing Coherence]

In the beam irradiation apparatus according to the present embodiment, at least one of the plurality of optical elements in the irradiation optical system has a structure of reducing the coherence of the irradiation beam. At least one of the plurality of optical elements has a pattern structure that splits an entering light flux into a plurality of split light fluxes in the one-dimensional direction, and that causes the plurality of split light fluxes to be outputted to be partially overlapped with one other in the one-dimensional direction.

FIG. 8 illustrates, in a schematic manner, an example of the cylindrical lens array L13 in the beam irradiation apparatus according to the comparative example.

The cylindrical lens array L13 in the beam irradiation apparatus according to the comparative example is structured to arrange the plurality of double-convex cylindrical lenses L13a. The first surface S1 of the cylindrical lens L13a serves as a first cylindrical surface having a convex shape. A second surface S2 of the cylindrical lens L13a serves as a second cylindrical surface having a convex shape. A curvature radius of the first surface S1 is R1, and the curvature radius of the second surface S2 is R2.

FIG. 9 illustrates, in a schematic manner, a structure of a working example of the cylindrical lens array L13 in the beam irradiation apparatus according to the first embodiment.

In FIG. 9, in contrast to the cylindrical lens array L13 in the comparative example, the first surface S1 (the first cylindrical surface) of the cylindrical lens L13a is structured in such a manner that a pattern structure (the superposition pattern 80) that reduces the coherence is superimposed on the first surface S1.

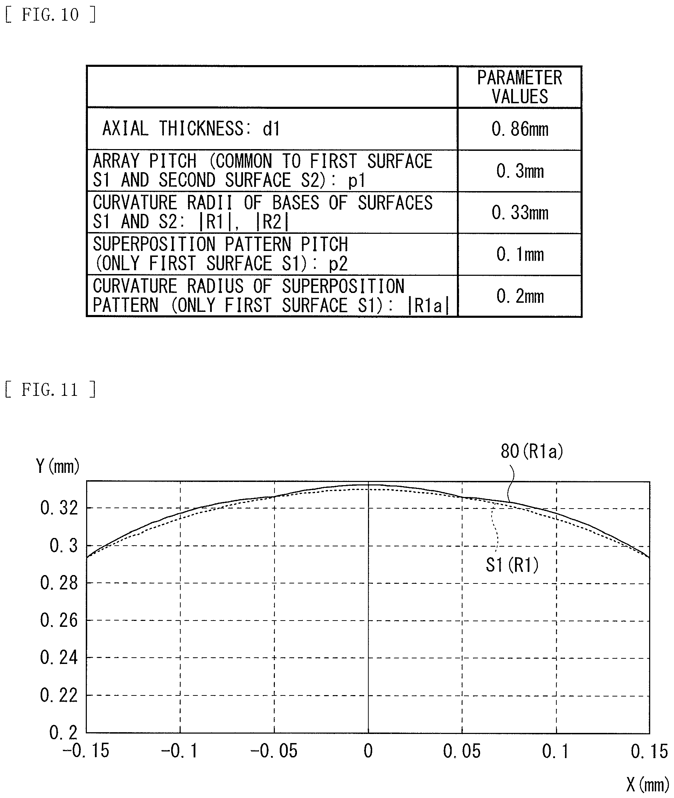

Each of FIG. 10 and FIG. 11 illustrates a numerical working example (a working example 1) of a structure of the cylindrical lens array L13 illustrated in FIG. 9.

FIG. 10 represents, as structural parameters of the cylindrical lens array L13, an axial thickness (d1), an array pitch (common to the first surface S1 and the second surface S2) p1, curvature radii of bases of the surfaces S1 and S2 (|R1| and |R2|), a superposition pattern pitch (only the first surface S1) p2, and a curvature radius of the superposition pattern 80 (only the first surface S1) (|R1a|).

In FIG. 11, X and Y coordinates of a curvature center of a base on the first surface S1 of the cylindrical lens L13a are defined as (0, 0). As the superposition pattern 80, three patterns each having a cylindrical convex shape are formed. The X and Y coordinates of the curvature centers of the three patterns each having cylindrical convex shape are (0, 0.1325), (0.0408, 0.1264), and (- 0.0408, 0.1264).

It is to be noted that here as a working example, an example where the first cylindrical surface of the cylindrical lens L13a is divided into three regions with the use of the pattern structure of reducing the coherence is provided; however, a structure of dividing the first cylindrical surface of the cylindrical lens L13a into at least two or more regions may be adopted to achieve an effect of reducing the coherence. In the above-described working example, the necessary superposition pattern 80 is applied on a surface of the cylindrical lens L13a, within a range ensuring that a relationship of a magnification ratio for optical transmission in the irradiation optical system is maintained, and in order to achieve the superposition effect of different phases.

The pattern structure of reducing the coherence may be a grating. As illustrated in FIG. 1, the grating 81 of the pattern structure of reducing the coherence that is disposed between the infrared light source 200 and the collimator lens L11 may be provided. The grating 81 has a concave-convex pattern structure in a plane of paper in FIG. 1.

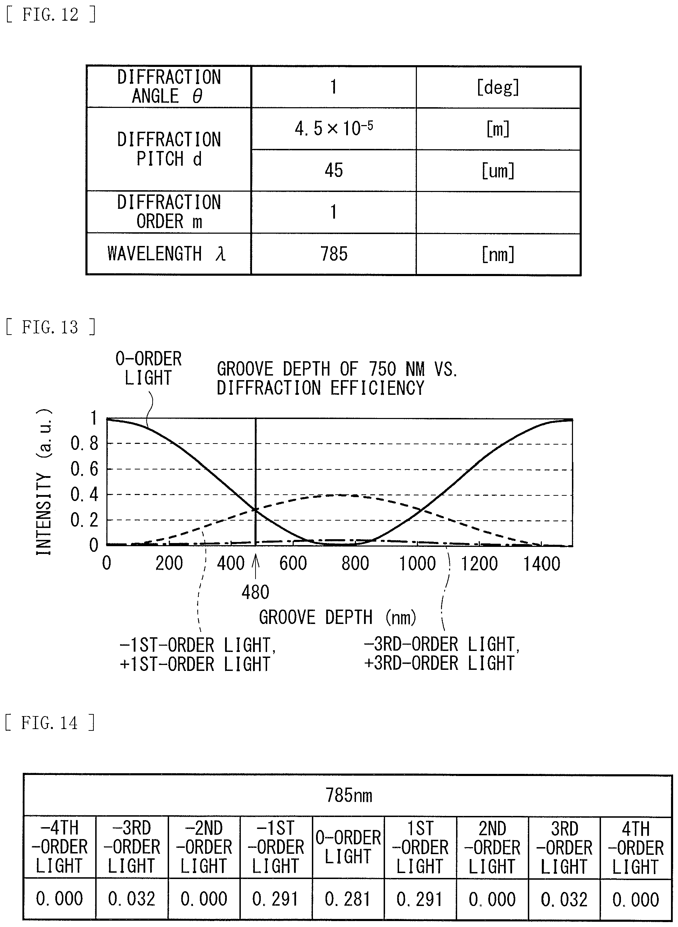

FIG. 12 illustrates a numerical working example (a working example 2) of the grating 81 that reduces the coherence.

FIG. 12 illustrates, as structural parameters of the grating 81, values of a diffraction angle $\theta$, a diffraction pitch d, a diffraction order m, and a wavelength $\lambda$. The grating 81 is a binary grating, which adjusts a groove depth in consideration of the wavelength, and makes light quantity of zero-order and +/- first-order light dominant. Each of the parameters has a relationship of $d \sin \theta = m\lambda$.

FIG. 13 illustrates an example of a relationship between a depth of a groove and diffraction efficiency (intensity) of the grating 81. FIG. 14 illustrates an example of values for each of diffraction orders (intensity) of the grating 81.

By setting the depth of the groove of the grating 81 at 480 nm, the zero-order and +/- first-order light becomes almost 29%, resulting in the efficiencies being matched. Insertion of the grating 81 on an optical path causes different wavefronts to be superimposed and produces a superposition effect of light fluxes, which makes it possible to reduce an interference state.

FIG. 15 illustrates quantitative data of interference states of irradiation beams that are caused by varying a configuration of the beam irradiation apparatus. FIG. 15 illustrates values of the comparative example, as well as the working examples 1, 2, and 3. The comparative example represents a case where the irradiation optical system has no structure of reducing the coherence. The working example 1 represents a case where the structure of reducing the coherence includes the superposition pattern 80 that is provided on the cylindrical lens array L13 (FIGs. 9 to 11). The working example 2 represents a case where the structure of reducing the coherence includes the grating 81. The working example 3 represents a case where the structure of reducing the coherence includes the superposition pattern 80 that is provided on the cylindrical lens array L13 and the grating 81.

The values indicated in FIG. 15 represent variations in strength and weakness of interference components with respect to the average intensity distribution, and are values obtained by quantifying the interference state of a beam using an expression given below. As a value of variance $\sigma$ decreases, the lower coherence is achieved.

$$\text{Variance } \sigma = \text{I/X}$$

I: an actual intensity distribution
X: an average value of moving across a partial width of 50 mm out of a total width of 510 mm

[1.4 Effects]

As described above, according to the present embodiment, the use of at least one of the plurality of optical elements in the irradiation optical system reduces the coherence in the one-dimensional direction of the irradiation beam, and thus non-uniformity in the intensity distribution of the irradiation beam is reduced, which makes it possible to stabilize the intensity distribution of the irradiation beam. This allows for suppression of the positional dependence of object detection.

It is to be noted that the effects described herein are merely exemplified and non-limiting, and the effects of the present disclosure may be other effects, or may further include other effects. The same is true for the effects of other subsequent embodiments.

[2. Second Embodiment]

Next, the description is provided on a beam irradiation apparatus according to a second embodiment of the present disclosure. It is to be noted that hereinafter any component parts substantially same as those in the beam irradiation apparatus according to the above-described first embodiment are denoted with the same reference numerals, and the related descriptions are omitted as appropriate.

FIG. 16 illustrates, in a schematic manner, an example of the beam irradiation apparatus according to the second embodiment of the present disclosure.

In the beam irradiation apparatus illustrated in FIG. 16, the irradiation optical system has a reflective grating 13A in place of the mirror 13 in contrast to a configuration example in FIG. 1. The reflective grating 13A has a pattern structure of reducing the coherence of the irradiation beam, similarly as the grating 81 disposed between the infrared light source 200 and the collimator lens L11 in the above-described first embodiment. In other words, the reflective grating 13A serves as an optical element having the pattern structure of reducing the coherence of the irradiation beam.

Any other configurations, operation, and effects may be substantially similar to those of the beam irradiation apparatus according to the above-described first embodiment.

[3. Third Embodiment]

Next, the description is provided on a beam irradiation apparatus according to a third embodiment of the present disclosure. It is to be noted that hereinafter any component parts substantially same as those in the beam irradiation apparatus according to the above-described first embodiment or second embodiment are denoted with the same reference numerals, and the related descriptions are omitted as appropriate.

FIG. 17 illustrates, in a schematic manner, an example of the beam irradiation apparatus according to the third embodiment of the present disclosure.

The beam irradiation apparatus illustrated in FIG. 17 is configured in such a manner that a pattern structure (a superposition pattern L22A) that reduces the coherence is superimposed on a surface on the beam output side of the second irradiation lens L22 in contrast to a configuration example illustrated in FIG. 1. In other words, the second irradiation lens L22 serves as an optical element having the pattern structure of reducing the coherence of the irradiation beam.

It is to be noted that, apart from an example of FIG. 17, the beam irradiation apparatus may be also configured in such a manner that the pattern structure (the superposition pattern L22A) that reduces the coherence of the irradiation beam is superimposed on any of other surfaces of the first irradiation lens L21 and the second irradiation lens L22.

By disposing a fine pattern of dispersing light in a light-expanding direction as the superposition pattern L22A on a surface of a lens that extends optical distribution like the first irradiation lens L21 and the second irradiation lens L22, it is possible to reduce the coherence of the irradiation beam. It is to be noted that the superposition pattern L22A has an optical action one-dimensionally in the plane of paper in FIG. 17.

Any other configurations, operation, and effects may be substantially similar to those of the beam irradiation apparatus according to the above-described first embodiment or second embodiment.

[4. Fourth Embodiment]

Next, the description is provided on a beam irradiation apparatus according to a fourth embodiment of the present disclosure. It is to be noted that hereinafter any component parts substantially same as those in the beam irradiation apparatus according to any of the above-described first to third embodiments are denoted with the same reference numerals, and the related descriptions are omitted as appropriate.

FIG. 18 illustrates, in a schematic manner, an example of the beam irradiation apparatus according to the fourth embodiment of the present disclosure.

The beam irradiation apparatus illustrated in FIG. 18 is configured in such a manner that a diffusion plate 82 having a pattern structure of reducing the coherence of the irradiation beam is added on an optical path of the irradiation optical system in contrast to a configuration example illustrated in FIG. 1. In other words, the diffusion plate 82 serves as an optical element having the pattern structure of reducing the coherence of the irradiation beam. The diffusion plate 82 has an optical action to diffuse light one-dimensionally in the plane of paper in FIG. 18.

It is to be noted that FIG. 18 illustrates an example where the diffusion plate 82 is disposed between the polarization split element 11 and the relay lens L18; however, the diffusion plate 82 may be disposed at any other position.

Any other configurations, operation, and effects may be substantially similar to those of the beam irradiation apparatus according to any of the above-described first to third embodiments.

[5. Fifth Embodiment]

Next, the description is provided on a beam irradiation apparatus according to a fifth embodiment of the present disclosure. It is to be noted that hereinafter any component parts substantially same as those in the beam irradiation apparatus according to any of the above-described first to fourth embodiments are denoted with the same reference numerals, and the related descriptions are omitted as appropriate.

FIG. 19 illustrates, in a schematic manner, an example of the beam irradiation apparatus according to the fifth embodiment of the present disclosure.

The beam irradiation apparatus illustrated in FIG. 19 is configured in such a manner that an oscillation mechanism 83 and an oscillation controller 84 are added to a configuration example illustrated in FIG. 1. In the above-described first embodiment, a structure of reducing the coherence of the irradiation beam by superimposing the superposition pattern 80 (FIG. 9) on the cylindrical lens array L13 is exemplified. In contrast, in a configuration example illustrated in FIG. 19, the cylindrical lens array L13 serves as an oscillation element that reduces the coherence of the irradiation beam by being oscillated in the one-dimensional direction by the oscillation mechanism 83. The oscillation mechanism 83 is controlled by the oscillation controller 84. A shape of the cylindrical lens array L13 may be substantially similar to that of a configuration example illustrated in FIG. 8, for example.

Any other configurations, operation, and effects may be substantially similar to those of the beam irradiation apparatus according to any of the above-described first to fourth embodiments.

[6. Other Embodiments]

The technology of the present disclosure is not limited to the descriptions of the respective embodiments in the above, and various modifications may be made.

For example, in the respective embodiments in the above, examples where the beam irradiation apparatus of the present disclosure is applied to the projector with a detection function are described; however, the beam irradiation apparatus of the present disclosure is also applicable to any of apparatuses other than the projector with a detection function.

Further, for example, the present technology may be configured as follows.

(1) A beam irradiation apparatus including:

a light source; and
an irradiation optical system that includes a plurality of optical elements disposed on an optical path of light obtained from the light source, and that outputs an irradiation beam in which the light obtained from the light source is expanded in a one-dimensional direction,
at least one of the plurality of optical elements having a structure of reducing coherence in the one-dimensional direction of the irradiation beam.

(2) The beam irradiation apparatus according to (1), in which the at least one of the plurality of optical elements has a pattern structure that splits an entering light flux into a plurality of split light fluxes in the one-dimensional direction, and that causes the plurality of split light fluxes to be outputted to be partially overlapped with one other in the one-dimensional direction.

(3) The beam irradiation apparatus according to (2), in which the plurality of optical elements includes:

a collimator lens that renders the light obtained from the light source into substantially collimated light; and
a cylindrical lens array that includes a plurality of cylindrical lenses, and that has a lens action only in the one-dimensional direction,
the cylindrical lens including

a first cylindrical surface having a convex shape on which the pattern structure is superimposed, and
a second cylindrical surface having a convex shape.

(4) The beam irradiation apparatus according to (3), in which the first cylindrical surface is divided into two or more regions by the pattern structure.

(5) The beam irradiation apparatus according to (2), in which the pattern structure includes a grating.

(6) The beam irradiation apparatus according to any one of (2) to (4), in which the plurality of optical elements includes:

a collimator lens that renders the light obtained from the light source into substantially collimated light; and
a grating that is disposed between the light source and the collimator lens and that has the pattern structure.

(7) The beam irradiation apparatus according to (2), in which the plurality of optical elements includes:

a polarization split element;
a collimator lens that is disposed in a first direction relative to the polarization split element, and that renders the light obtained from the light source into substantially collimated light;
a reflective grating that is disposed in a second direction relative to the polarization split element, and that has the pattern structure;

a cylindrical lens array that is disposed between the reflective grating and the polarization split element, and that has a lens action only in the one-dimensional direction; and
an irradiation lens that is disposed in a third direction relative to the polarization split element, and that has a light-expanding action only in the one-dimensional direction.

(8) The beam irradiation apparatus according to (2), in which the at least one of the plurality of optical elements includes an irradiation lens that has the pattern structure formed on a surface of the irradiation lens, and that has a light-expanding action only in the one-dimensional direction.

(9) The beam irradiation apparatus according to (1), in which the at least one of the plurality of optical elements includes a diffusion plate that has a light-diffusing action only in the one-dimensional direction.

(10) The beam irradiation apparatus according to (1), in which the at least one of the plurality of optical elements includes an oscillation element that has a lens action only in the one-dimensional direction, and that is oscillated in the one-dimensional direction by an oscillation mechanism.

(11) A projector with a detection function including:

a projection optical system that projects picture light on a projection plane;
an irradiation optical system that includes a plurality of optical elements disposed on an optical path of light obtained from a light source, that expands the light obtained from the light source in a one-dimensional direction, and that generates and outputs an irradiation beam to be used for detecting a detection object on the projection plane, the detection object being configured to be detected; and
an imaging device that scattered light of the irradiation beam hitting against the detection object enters,
at least one of the plurality of optical elements having a structure of reducing coherence in the one-dimensional direction of the irradiation beam.

(12) The projector with a detection function according to (11), in which the irradiation optical system outputs light that is substantially collimated relative to the projection plane as the irradiation beam.

(13) The projector with a detection function according to (11) or (12), further including an image processing section that performs position detection of the detection object on a basis of an imaging result obtained by the imaging device.

This application claims the priority on the basis of Japanese Patent Application No. 2017-057218 filed on March 23, 2017 with Japan Patent Office, the entire contents of which are incorporated in this application by reference.

It should be understood by those skilled in the art that various modifications, combinations, sub-combinations, and alterations may occur depending on design requirements and other factors insofar as they are within the scope of the appended claims or the equivalents thereof.

## Claims

1. A beam irradiation apparatus comprising:

   a light source; and
   an irradiation optical system that includes a plurality of optical elements disposed on an optical path of light obtained from the light source, and that outputs an irradiation beam in which the light obtained from the light source is expanded in a one-dimensional direction,
   at least one of the plurality of optical elements having a structure of reducing coherence in the one-dimensional direction of the irradiation beam.

2. The beam irradiation apparatus according to claim 1, wherein the at least one of the plurality of optical elements has a pattern structure that splits an entering light flux into a plurality of split light fluxes in the one-dimensional direction, and that causes the plurality of split light fluxes to be outputted to be partially overlapped with one other in the one-dimensional direction.

3. The beam irradiation apparatus according to claim 2, wherein the plurality of optical elements includes:

   a collimator lens that renders the light obtained from the light source into substantially collimated light; and
   a cylindrical lens array that includes a plurality of cylindrical lenses, and that has a lens action only in the one-dimensional direction,
   the cylindrical lens including

   a first cylindrical surface having a convex shape on which the pattern structure is superimposed, and
   a second cylindrical surface having a convex shape.

4. The beam irradiation apparatus according to claim 3, wherein the first cylindrical surface is divided into two or more regions by the pattern structure.

5. The beam irradiation apparatus according to claim 2, wherein the pattern structure comprises a grating.

6. The beam irradiation apparatus according to claim 2, wherein the plurality of optical elements includes:

a collimator lens that renders the light obtained from the light source into substantially collimated light; and
a grating that is disposed between the light source and the collimator lens and that has the pattern structure.

7. The beam irradiation apparatus according to claim 2, wherein the plurality of optical elements includes:

a polarization split element;
a collimator lens that is disposed in a first direction relative to the polarization split element, and that renders the light obtained from the light source into substantially collimated light;
a reflective grating that is disposed in a second direction relative to the polarization split element, and that has the pattern structure;
a cylindrical lens array that is disposed between the reflective grating and the polarization split element, and that has a lens action only in the one-dimensional direction; and
an irradiation lens that is disposed in a third direction relative to the polarization split element, and that has a light-expanding action only in the one-dimensional direction.

8. The beam irradiation apparatus according to claim 2, wherein the at least one of the plurality of optical elements includes an irradiation lens that has the pattern structure formed on a surface of the irradiation lens, and that has a light-expanding action only in the one-dimensional direction.

9. The beam irradiation apparatus according to claim 1, wherein the at least one of the plurality of optical elements includes a diffusion plate that has a light-diffusing action only in the one-dimensional direction.

10. The beam irradiation apparatus according to claim 1, wherein the at least one of the plurality of optical elements includes an oscillation element that has a lens action only in the one-dimensional direction, and that is oscillated in the one-dimensional direction by an oscillation mechanism.

11. A projector with a detection function comprising:

a projection optical system that projects picture light on a projection plane;
an irradiation optical system that includes a plurality of optical elements disposed on an optical path of light obtained from a light source, that expands the light obtained from the light source in a one-dimensional direction, and that generates and outputs an irradiation beam to be used for detecting a detection object on the projection plane, the detection object being configured to be detected; and
an imaging device that scattered light of the irradiation beam hitting against the detection object enters,
at least one of the plurality of optical elements having a structure of reducing coherence in the one-dimensional direction of the irradiation beam.

12. The projector with a detection function according to claim 11, wherein the irradiation optical system outputs light that is substantially collimated relative to the projection plane as the irradiation beam.

13. The projector with a detection function according to claim 11, further comprising an image processing section that performs position detection of the detection object on a basis of an imaging result obtained by the imaging device.

[ FIG. 1 ]

[ FIG.2 ]

[ FIG. 3 ]

[ FIG. 4 ]

[ FIG. 5 ]

## INTENSITY DISTRIBUTION AT A-A' LINE POSITIONS

[ FIG. 6 ]

## COMPARATIVE EXAMPLE

[ FIG. 7 ]

## WORKING EXAMPLE

[ FIG. 8 ]

[ FIG.9 ]

[ FIG. 10 ]

| | PARAMETER VALUES |
|---|---|
| AXIAL THICKNESS: d1 | 0. 86mm |
| ARRAY PITCH (COMMON TO FIRST SURFACE S1 AND SECOND SURFACE S2): p1 | 0. 3mm |
| CURVATURE RADII OF BASES OF SURFACES S1 AND S2: |R1|, |R2| | 0. 33mm |
| SUPERPOSITION PATTERN PITCH (ONLY FIRST SURFACE S1): p2 | 0. 1mm |
| CURVATURE RADIUS OF SUPERPOSITION PATTERN (ONLY FIRST SURFACE S1): |R1a| | 0. 2mm |

[ FIG. 11 ]

[ FIG. 12 ]

| DIFFRACTION ANGLE $\theta$ | 1 | [deg] |
|---|---|---|
| DIFFRACTION PITCH d | 4.5 × 10⁻⁵ | [m] |
| | 45 | [um] |
| DIFFRACTION ORDER m | 1 | |
| WAVELENGTH $\lambda$ | 785 | [nm] |

[ FIG. 13 ]

GROOVE DEPTH OF 750 NM VS. DIFFRACTION EFFICIENCY

[ FIG. 14 ]

| 785nm | | | | | | | | |
|---|---|---|---|---|---|---|---|---|
| -4TH -ORDER LIGHT | -3RD -ORDER LIGHT | -2ND -ORDER LIGHT | -1ST -ORDER LIGHT | 0-ORDER LIGHT | 1ST -ORDER LIGHT | 2ND -ORDER LIGHT | 3RD -ORDER LIGHT | 4TH -ORDER LIGHT |
| 0.000 | 0.032 | 0.000 | 0.291 | 0.281 | 0.291 | 0.000 | 0.032 | 0.000 |

[ FIG. 15 ]

| | σ |
|---|---|
| COMPARATIVE EXAMPLE (WITHOUT SUPERPOSITION PATTERN AND GRATING) | 0.1 |
| WORKING EXAMPLE 1 (SUPERPOSITION PATTERN ADDED) | 0.085 |
| WORKING EXAMPLE 2 (GRATING ADDED) | 0.9 |
| WORKING EXAMPLE 3 (SUPERPOSITION PATTERN AND GRATING ADDED) | 0.083 |

[ FIG. 16 ]

[ FIG. 17 ]

[ FIG. 18 ]

[ FIG. 19 ]

OSCILLATION MECHANISM 83

OSCILLATION CONTROLLER 84

## INTERNATIONAL SEARCH REPORT

| | International application No. |
|---|---|
| | PCT/JP2018/005715 |

**A. CLASSIFICATION OF SUBJECT MATTER**
Int.Cl. G06F3/042(2006.01)i, G02B27/48(2006.01)i, G03B21/00(2006.01)i, G03B21/14(2006.01)i, H04N5/74(2006.01)i

According to International Patent Classification (IPC) or to both national classification and IPC

**B. FIELDS SEARCHED**

Minimum documentation searched (classification system followed by classification symbols)
Int.Cl. G06F3/042, G02B27/48, G03B21/00, G03B21/14, H04N5/74

Documentation searched other than minimum documentation to the extent that such documents are included in the fields searched
Published examined utility model applications of Japan    1922–1996
Published unexamined utility model applications of Japan  1971–2018
Registered utility model specifications of Japan          1996–2018
Published registered utility model applications of Japan  1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2015-169804 A (RICOH KK) 28 September 2015, paragraphs [0008]–[0036], [0062]–[0064], [0080]–[0087], [0212]–[0228], [0298], [0299], fig. 1–3<br>& EP 2916149 A1, paragraphs [0017]–[0051], [0082]–[0084], [0102]–[0111], [0283]–[0299], [0366], [0367], fig. 1A–3C | 1–2, 8–9<br>3–5, 10–13<br>6–7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27.03.2018 | 03.04.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/005715 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2013-231940 A (SONY CORPORATION) 14 November 2013, paragraphs [0020]-[0032], fig. 1, 4<br>& US 2013/0258294 A1, paragraphs [0081]-[0093], fig. 1, 4 & CN 103365053 A | 3-4, 10<br>6-7 |
| Y<br>A | JP 2008-535020 A (EVANS & SUTHERLAND COMPUTER CORPORATION) 28 August 2008, paragraph [0005]<br>& US 2006/0221429 A1, paragraph [0005] & WO 2006/104704 A1 & GB 2438348 A | 5<br>6-7 |
| Y<br>A | JP 2016-57426 A (SONY CORPORATION) 21 April 2016, paragraphs [0014]-[0021], [0053], fig. 1-4<br>& US 2017/0228057 A1, paragraphs [0059]-[0066], [0098], fig. 1-4 & WO 2016/038839 A1 & CN 106716318 A | 11-13<br>6-7 |
| A | JP 2008-185628 A (SONY CORPORATION) 14 August 2008, paragraphs [0014]-[0019], fig. 1<br>& US 2008/0180934 A1, paragraphs [0057]-[0073], fig. 4 | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015064550 A
- WO 2016125384 A
- JP 2017057218 A